# EUROPÄISCHE PATENTSCHRIFT

(11) **EP 4 296 970 B1**
(45) Veröffentlichungstag und Bekanntmachung des Hinweises auf die Patenterteilung: **25.02.2026**
(21) Anmeldenummer: 22180630.0
(22) Anmeldetag: 23.06.2022
(51) Int. Cl.: G06V 20/58, G06V 20/64, G06V 20/70, G06V 10/82, G06V 10/70, G06T 17/00, G06T 19/20

(54) **COMPUTERIMPLEMENTIERTES VERFAHREN UND SYSTEM ZUM ERZEUGEN EINER VIRTUELLEN FAHRZEUGUMGEBUNG**
COMPUTER-IMPLEMENTED METHOD AND SYSTEM FOR CREATING A VIRTUAL VEHICLE ENVIRONMENT
PROCÉDÉ MIS EN UVRE PAR ORDINATEUR ET SYSTÈME PERMETTANT DE GÉNÉRER UN ENVIRONNEMENT VIRTUEL DE VÉHICULE

(43) Veröffentlichungstag der Anmeldung: 27.12.2023
(73) Patentinhaber: dSPACE GmbH, 33102 Paderborn (DE)
(72) Erfinder: Viezens, Frederik, 33100 Paderborn (DE); Bohnmann, Leon, 33803 Steinhagen (DE)

(56) Entgegenhaltungen:
- DE-A1- 102021 128 704
- TAMAYO WILLIAM C ET AL: "Improving Object Distance Estimation in Automated Driving Systems Using Camera Images, LiDAR Point Clouds and Hierarchical Clustering", 2021 IEEE INTELLIGENT VEHICLES SYMPOSIUM WORKSHOPS (IV WORKSHOPS), IEEE, 11 July 2021 (2021-07-11), pages 299 - 305, XP034064444, DOI: 10.1109/IVWORKSHOPS54471.2021.9669206
- FU CHEN ET AL: "Camera-Based Semantic Enhanced Vehicle Segmentation for Planar LIDAR", 2018 21ST INTERNATIONAL CONFERENCE ON INTELLIGENT TRANSPORTATION SYSTEMS (ITSC), IEEE, 4 November 2018 (2018-11-04), pages 3805 - 3810, XP033470061, ISBN: 978-1-7281-0321-1, [retrieved on 20181207], DOI: 10.1109/ITSC.2018.8569413
- TNTC: "Procedural Generation in Unity", 17 March 2023 (2023-03-17), XP093191571, Retrieved from the Internet <URL:https://www.youtube.com/watch?v=PhLcNhK9aro> [retrieved on 20240731]
- ANONYMOUS: "most widely used 3D game library - Google Search", 31 July 2024 (2024-07-31), XP093191573, Retrieved from the Internet <URL:https://www.google.com/search?q=most+widely+used+3D+game+library&sca_esv=553650bb8dd64e30&rlz=1C1GCEA_enNL999NL999&ei=lF2qZsKuJ9GKi-gP0pjlqAU&ved=0ahUKEwjCyLWT0dGHAxVRxQIHHVJMGVUQ4dUDCA8&uact=5&oq=most+widely+used+3D+game+library&gs_lp=Egxnd3Mtd2l6LXNlcnAiIG1vc3Qgd2lkZWx5IHVzZWQgM0QgZ2FtZSBsaWJyYXJ5> [retrieved on 20240731]

## Beschreibung

Die vorliegende Erfindung betrifft ein computerimplementiertes Verfahren zum Erzeugen einer virtuellen Fahrzeugumgebung zum Testen hochautomatisierter Fahrfunktionen eines Kraftfahrzeugs.

Die Erfindung betrifft ferner ein System zum Erzeugen einer virtuellen Fahrzeugumgebung zum Testen hochautomatisierter Fahrfunktionen eines Kraftfahrzeugs.

### Stand der Technik

Grafische Benutzeroberflächen zum Testen hochautomatisierter Fahrfunktionen eines Kraftfahrzeugs weisen in der Regel eine Mehrzahl von Komponenten auf, welche eine Verwaltung von Parametersätzen, eine Erstellung einer virtuellen Fahrzeugumgebung sowie eine Experimentverwaltung ermöglichen.

Ein Szenenaufbau der virtuellen Fahrzeugumgebung, d.h. eine Definition statischer und dynamischer Objekte einer Szene, erfolgt dabei durch manuelle Konfiguration und Import von in einer Objektbibliothek hinterlegten Objekten.

CN 000205121971 U offenbart ein Verfahren zum Testen autonomer Fahrzeuge. Gemäß dem Verfahren wird ein autonomes Fahrzeug in einer Simulationsumgebung erzeugt. Gemäß vorab aufgezeichneter Zustandsinformationen eines virtuellen Fahrzeugs wird in der Simulationsumgebung eine Verkehrsumgebung aufgebaut, um dem autonomen Fahrzeug zu ermöglichen, in der Verkehrsumgebung zu fahren. DE 10 2021 128704 A1 (DSPACE GMBH [DE]) 5. Mai 2022, betrifft ein computerimplementiertes Verfahren zur Erzeugung von Fahrszenarios auf der Grundlage von LIDAR-Rohdaten.

Die vorstehend genannten Verfahren haben jedoch gemeinsam, dass ein hoher Aufwand zum Erzeugen der virtuellen Fahrzeugumgebung zum Testen der hochautomatisierten Fahrfunktionen des Kraftfahrzeugs vorhanden ist, was einen hohen personellen und kostenseitigen Aufwand zur Folge hat.

Demzufolge besteht ein Bedarf, bestehende Verfahren und Systeme zum Erzeugen einer virtuellen Fahrzeugumgebung zum Testen hochautomatisierter Fahrfunktionen eines Kraftfahrzeugs dahingehend zu verbessern, dass eine vereinfachte, effizientere und kostengünstigere Erstellung der virtuellen Fahrzeugumgebung ermöglicht wird.

Es ist daher Aufgabe der Erfindung, ein computerimplementiertes Verfahren, ein System, ein Computerprogramm und einen computerlesbaren Datenträger anzugeben, welche eine vereinfachte, effizientere und kostengünstigere Erzeugung einer virtuellen Fahrzeugumgebung zum Testen hochautomatisierter Fahrfunktionen eines Kraftfahrzeugs ermöglichen.

### Offenbarung der Erfindung

Die Aufgabe wird erfindungsgemäß gelöst durch ein computerimplementiertes Verfahren zum Erzeugen einer virtuellen Fahrzeugumgebung zum Testen hochautomatisierter Fahrfunktionen eines Kraftfahrzeugs.

Das Verfahren umfasst ein Bereitstellen von vorerfassten Kamerabilddaten und LiDAR-Punktwolke-Daten einer realen Fahrzeugumgebung sowie ein pixelweises Klassifizieren der vorerfassten Kamerabilddaten unter Verwendung eines Algorithmus maschinellen Lernens, welcher für jedes Pixel eine zugehörige Klasse und einen die Klassifizierung betreffenden Konfidenzwert ausgibt.

Des Weiteren umfasst das Verfahren ein Projizieren der pixelweise klassifizierten Kamerabilddaten auf die vorerfassten LiDAR-Punktwolke-Daten, wobei jeweiligen durch klassifizierte Pixel der Kamerabilddaten überlagerten, insbesondere selbe Bildkoordinaten aufweisenden, Punkten der LiDAR-Punktwolke eine identische Klasse zugewiesen wird.

Das Projizieren der pixelweise klassifizierten Kamerabilddaten auf die vorerfassten LiDAR-Punktwolke-Daten ermöglicht in vorteilhafter Weise, dass die dreidimensionale Darstellung der Punktewolke durch weitere Informationen wie beispielsweise eine Klasse und/oder einen Farbwert angereichert werden kann.

Das Verfahren umfasst ferner ein Instanz-Segmentieren der klassifizierten LiDAR-Punktwolke-Daten zum Bestimmen zumindest eines von einer Klasse umfassten realen Objektes sowie ein Selektieren und Aufrufen eines dem zumindest einen realen Objekt entsprechenden gespeicherten, synthetisch generierten ersten Objekts oder prozedurales Generieren eines dem zumindest einen realen Objekt entsprechenden, synthetisch generierten zweiten Objekts.

Darüber hinaus umfasst das Verfahren ein Integrieren des synthetisch generierten ersten Objekts oder des synthetisch generierten zweiten Objekts in eine vorgegebene virtuelle Fahrzeugumgebung.

Die reale Fahrzeugumgebung entspricht einer Fahrzeugumgebung des Kraftfahrzeugs im Straßenverkehr, insbesondere in einer Mehrzahl von Verkehrssituationen des Straßenverkehrs. Die realen Objekte können statische Objekte wie beispielsweise Verkehrszeichen, Gebäude, Bepflanzung und/oder parkende Kraftfahrzeuge sein. Ferner können die realen Objekte dynamische Objekte wie beispielsweise fahrende Kraftfahrzeuge sein.

Die synthetisch generierten Objekte sind in verschiedene Objektkategorien gegliedert und repräsentieren die in den Kamerabilddaten und/oder der Lidarpunktwolke der realen Fahrzeugumgebung enthaltenen realen Objekte.

Die virtuelle Fahrzeugumgebung ist eine computergenerierte Repräsentation der sensorbasiert erfassten realen Fahrzeugumgebung.

Das prozedurale Generieren bezeichnet ein Verfahren zum Erzeugen von 3-D Objekten in Echtzeit während der Ausführung des Computerprogramms. Die 3-D Objekte werden hierbei nicht zufällig erzeugt, sondern die Generierung folgt deterministischen Algorithmen, um bei gleichen Ausgangsbedingungen immer wieder dieselben Inhalte erzeugen zu können.

Die Erfindung betrifft des Weiteren ein System zum Erzeugen einer virtuellen Fahrzeugumgebung zum Testen hochautomatisierter Fahrfunktionen eines Kraftfahrzeugs.

Das System umfasst einen Datenspeicher zum Bereitstellen von vorerfassten Kamerabilddaten und LiDAR-Punktwolke-Daten einer realen Fahrzeugumgebung sowie eine Berechnungseinrichtung zum pixelweisen Klassifizieren der vorerfassten Kamerabilddaten unter Verwendung eines Algorithmus maschinellen Lernens, welcher dazu eingerichtet ist, für jedes Pixel eine zugehörige Klasse und einen die Klassifizierung betreffenden Konfidenzwert auszugeben.

Der Konfidenzwert wird hierbei dazu verwendet, gemäß einem Schwellwert als unzuverlässig klassifizierte Pixel bzw. deren Projektion, zugehörige LiDAR-Punkte von der Nutzung im weiteren Verfahren auszuschließen.

Des Weiteren wird der Konfidenzwert im Verfahren zur Instanz-Segmentierung der LiDAR-Punktewolke dazu genutzt, um eine Korrektheit der Klassenzuweisung der detektierten Instanzen abzusichern.

Des Weiteren ist die Berechnungseinrichtung konfiguriert, ein Projizieren der pixelweise klassifizierten Kamerabilddaten auf die vorerfassten LiDAR-Punktwolke-Daten durchzuführen, wobei die Berechnungseinrichtung konfiguriert ist, jeweiligen durch klassifizierte Pixel der Kamerabilddaten überlagerten, insbesondere selbe Bildkoordinaten aufweisenden, Punkten der LiDAR-Punktwolke eine identische Klasse zuzuweisen. Das Projizieren der Kamerabilddaten auf die vorerfassten LiDAR-Punktwolke-Daten erfolgt dabei durch Koordinatentransformation.

Ferner ist die Berechnungseinrichtung konfiguriert, ein Instanz-Segmentieren der klassifizierten LiDAR-Punktwolke-Daten zum Bestimmen zumindest eines von einer Klasse umfassten realen Objekts sowie Mittel zum Selektieren und Aufrufen eines gespeicherten, synthetisch generierten ersten Objekts oder prozedurales Generieren eines dem zumindest einen realen Objekt entsprechenden, synthetisch generierten zweiten Objekts durchzuführen.

Darüber hinaus ist die Berechnungseinrichtung konfiguriert, ein Integrieren des synthetisch generierten ersten oder zweiten Objekts in eine vorgegebene virtuelle Fahrzeugumgebung durchzuführen.

Die Erfindung betrifft ferner ein Computerprogramm mit Programmcode, um das erfindungsgemäße Verfahren durchzuführen, wenn das Computerprogramm auf einem Computer ausgeführt wird.

Die Erfindung betrifft darüber hinaus einen computerlesbaren Datenträger mit Programmcode eines Computerprogramms, um das erfindungsgemäße Verfahren durchzuführen, wenn das Computerprogramm auf einem Computer ausgeführt wird.

Algorithmen des maschinellen Lernens basieren darauf, dass Verfahren der Statistik verwendet werden, um eine Datenverarbeitungsanlage derart zu trainieren, dass diese eine bestimmte Aufgabe ausführen kann, ohne dass diese ursprünglich explizit hierzu programmiert wurde. Das Ziel des maschinellen Lernens besteht dabei darin, Algorithmen zu konstruieren, die aus Daten lernen und Vorhersagen treffen können. Diese Algorithmen erstellen mathematische Modelle, mit denen beispielsweise Daten klassifiziert werden können.

Zum Einsatz kommen derartige Algorithmen des maschinellen Lernens beispielsweise, wenn physikalische Modelle, das heißt auf physikalischen Gegebenheiten und/oder Abhängigkeiten basierende Modelle, an ihre Grenzen stoßen, beispielsweise aufgrund eines erhöhten Ressourcenverbrauchs.

Der die Klassifizierung betreffende Konfidenzwert gibt dabei für jedes Pixel Wahrscheinlichkeiten für die Zugehörigkeit zu einer spezifischen Klasse aus, wobei in der Regel die Klasse ausgewählt wird, welche die höchste Wahrscheinlichkeit aufweist. Ferner kann beispielsweise ein Schwellwert definiert werden, welcher mindestens erreicht werden muss, damit ein gültiges Klassifikationsergebnis vorliegt.

Die Transformation einer durch einen LiDAR-Sensor erfassten 3D-Punktwolke in ein 2D-Bild ist beispielsweise aus arXiv:2007.05490v1 9 Jul 2020 "Camera-Lidar Integration: Probabilistic sensorfusion for semantic mapping" bekannt.

Die Instanz-Segmentierung beschreibt die Zuordnung der einzelnen Klassen zu separaten Instanzen. Gibt es beispielsweise mehrere Fahrzeuge in einem Bild, wird jedes individuelle Fahrzeug als eine Instanz eingeordnet, wohingegen semantische Segmentierung alle Fahrzeuge als eine Instanz einordnet.

Bei dem Instanz-Segmentieren der klassifizierten LiDAR-Punktwolke-Daten zum Bestimmen jeweils von einer Klasse umfasster realer Objekte können somit Objekte einer Klasse, beispielsweise individuelle Fahrzeuge der Klasse Fahrzeug identifiziert bzw. zu jeweils zu einer Instanz segmentiert werden. Jedes Fahrzeug bildet somit eine Instanz der Klasse Fahrzeug.

Eine Idee der vorliegenden Erfindung ist es, aus realen Videobilddaten einer Messfahrt eines Kraftfahrzeugs automatisch eine synthetische 3-D Szene aufzubauen.

Im Rahmen der semantischen Segmentierung bzw. pixelweisen Klassifizierung wird jedem Punkt der Kamera-Bilddaten eine entsprechende Klasse zugewiesen. Anschließend werden die erfassten LiDAR-Punktwolke-Daten durch Überlagerung der klassifizierten Kamerabilddaten präzisiert. Dies wird dadurch erreicht, indem die semantische Segmentierung bzw. pixelweise Klassifizierung der Kamera-Bilddaten auf die LiDAR-Punktwolke-Daten projiziert wird.

Auf Basis der verbesserten, reduzierten und damit aussagekräftigeren, Punktwolke-Daten wird sodann die Instanz-Segmentierung durchgeführt. Somit können das durch die Klasse umfasste Objekt bzw. Objekte segmentiert bzw. differenziert werden.

Die Instanz-Segmentierung der Punktewolke bietet somit gegenüber einer Verwendung von lediglich Kamera-Bilddaten den Vorteil, dass die räumliche Komponente zur Instanzunterscheidung mit einbezogen werden kann.

Auf Basis von Klasse und Instanz kann sodann nach einem passenden Asset bzw. synthetisch generierten Objekt in einer Datenbank gesucht werden. Falls ein entsprechendes Asset vorhanden sein sollte oder ein Asset, das einen gewissen Grad an Ähnlichkeit aufweist, wird dieses Asset ausgewählt.

Falls ein entsprechendes Asset nicht vorhanden sein sollte kann dieses unter Angabe der entsprechenden Klasse und Instanz prozedural generiert werden.

Durch die Automatisierung des Szenenaufbaus der virtuellen Fahrzeugumgebung unter Verwendung der aus der realen Fahrzeugumgebung gewonnenen Daten kann somit in vorteilhafter Weise eine deutliche Vereinfachung des Szenenaufbaus der virtuellen Fahrzeugumgebung in Verbindung mit einem beträchtlichen Effizienzgewinn und einer damit einhergehenden Kostenreduzierung erreicht werden.

Das pixelweise Klassifizieren der vorerfassten Kamerabilddaten erfolgt dabei durch einen Algorithmus überwachten Lernens oder durch einen Algorithmus unüberwachten Lernens, insbesondere ein künstliches neuronales Netz. Somit kann in vorteilhafter Weise ein Algorithmus verwendet werden, welcher für die erfindungsgemäße Aufgabe optimale Eigenschaften hinsichtlich Trainingsaufwand bzw. Verbrauch von Rechenressourcen aufweist.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung umfasst das Verfahren ferner, dass für eine vorgegebene erste Anzahl von Klassen das Selektieren und Aufrufen des dem zumindest einen realen Objekt entsprechenden gespeicherten, synthetisch generierten ersten Objekts durchgeführt und für eine vorgegebene zweite Anzahl von Klassen, insbesondere das prozedurale Generieren des dem zumindest einen realen Objekt entsprechenden, synthetisch generierten zweiten Objekts durchgeführt wird.

Gebäude werden aufgrund deren Variabilität stets prozedural generiert, wohingegen Verkehrsschilder beispielsweise aufgrund deren limitierter Anzahl in einem Datenspeicher hinterlegt und entsprechend selektierbar sind.

Gemäß einer weiteren bevorzugten Weiterbildung umfasst das Verfahren, dass basierend auf dem Instanz-Segmentieren der klassifizierten LiDAR-Punktwolke-Daten zum Bestimmen zumindest eines von einer Klasse umfassten realen Objektes ein Extrahieren von das zumindest eine reale Objekt beschreibenden Merkmalen, insbesondere eine Größe und/oder ein Radius des Objekts, durchgeführt wird. Somit können in vorteilhafter Weise die Informationen der extrahierten Merkmale von einem nachgelagerten Prozess verwendet werden.

Gemäß einer weiteren bevorzugten Weiterbildung umfasst das Verfahren, dass basierend auf den extrahierten Merkmalen das prozedurale Generieren des dem zumindest einen realen Objekt entsprechenden, synthetisch generierten zweiten Objekts durchgeführt wird. Durch die prozedurale Generierung des synthetischen Objekts kann somit ein dem realen Objekt entsprechendes synthetisches Objekt generiert werden.

Gemäß einer weiteren bevorzugten Weiterbildung umfasst das Verfahren, dass basierend auf den extrahierten Merkmalen ein Vergleichen des segmentierten, zumindest einen realen Objekts einer Klasse mit einer Vielzahl gespeicherter, synthetisch generierter Objekte durchgeführt wird. Somit kann in vorteilhafter Weise eine effiziente Identifizierung eines dem realen Objekt zugeordneten synthetisch generierten Objekt durchgeführt werden.

Durch Vergleichen kann somit in vorteilhafter Weise ermöglicht werden, dass eine automatische Zuordnung sich entsprechender realer und synthetisch generierter Objekte erfolgt, sodass die so identifizierten synthetisch generierten Objekte dann in die virtuelle Fahrzeugumgebung integrierbar sind.

Gemäß einer weiteren bevorzugten Weiterbildung umfasst das Verfahren, dass basierend auf dem Vergleichen des segmentierten, zumindest einen realen Objekts einer Klasse mit einer Vielzahl gespeicherter, synthetisch generierter Objekte ein, ein vorgegebenes Ähnlichkeitsmaß aufweisendes, gespeichertes, synthetisch generiertes erstes Objekt selektiert und aufgerufen wird.

Somit kann in vorteilhafter Weise ermöglicht werden, dass ein zu dem selektierten realen Objekt ein hohes Ähnlichkeitsmaß aufweisendes synthetisches Objekt aufrufbar ist.

Gemäß einer weiteren bevorzugten Weiterbildung umfasst das Verfahren, dass die durch den eines Algorithmus maschinellen Lernens bestimmten Klassen Gebäude, Fahrzeuge, Verkehrsschilder, Ampeln, Fahrbahnen, Fahrbahnmarkierungen, Bepflanzung, Fußgänger und/oder sonstige Objekte repräsentieren. Somit können in vorteilhafter Weise die herkömmlicherweise in einer Szene enthaltenen Objekte zuverlässig klassifiziert werden.

Gemäß einer weiteren bevorzugten Weiterbildung umfasst das Verfahren, dass jeweilige Punkte der LiDAR-Punktwolke, welche nicht durch klassifizierte Pixel der Kamerabilddaten überlagert werden, insbesondere selbe Bildkoordinaten aufweisen, aus der LiDAR-Punktwolke entfernt werden. Damit kann eine Zuverlässigkeit detektierter Objekte der Szene in vorteilhafter Weise verbessert werden.

Der Vorteil der Kombination von Kamera-Bilddaten und LiDAR-Punktwolke-Daten ergibt sich durch die Zusammenführung von Information aus unterschiedlichen Domänen wie beispielsweise Klasse, Farbwerte, etc. aus Kamera-Bilddaten sowie einer räumlichen Information aus LiDAR-Punktwolke-Daten.

Gerade bei Fassaden und Vegetation ist es nur anhand von Kameradaten nicht trivial, eine Instanz-Zuweisung zu treffen. Beispielsweise besteht immer die Gefahr, dass zwei sich im Kamerabild teils überlagernde Objekte, z.B. Bäume, im Kamerabild als einzelne Instanz erkannt werden, während die Segmentierung im dreidimensionalen Raum eine Unterscheidung auf Basis des euklidischen Abstands ermöglicht.

Gemäß einer weiteren bevorzugten Weiterbildung umfasst das Verfahren, dass jeweilige Punkte der LiDAR-Punktwolke, welche durch klassifizierte Pixel der Kamerabilddaten überlagert werden, welche Pixel einen Konfidenzwert aufweisen, der geringer als ein vorgegebener erster Schwellwert ist, zum Bereitstellen reduzierter LiDAR-Punktwolke-Daten, entfernt werden. Somit wird ermöglicht, dass eine Folgeverarbeitung weniger anfällig für Fehler in der Klassifizierungsphase ist. Dadurch steigt ferner die Zuverlässigkeit detektierter Objekte.

Gemäß einer weiteren bevorzugten Weiterbildung umfasst das Verfahren, dass das Instanz-Segmentieren der klassifizierten LiDAR-Punktwolke-Daten zum Bestimmen des von einer Klasse umfassten zumindest einen realen Objekts unter Verwendung der reduzierten LiDAR-Punktwolke-Daten durchgeführt wird. Das Instanz-Segmentieren wird somit unter Verwendung zuverlässigerer Daten durchgeführt, wodurch wiederum das Ergebnis der Instanz-Segmentierung verbessert werden kann.

Gemäß einer weiteren bevorzugten Weiterbildung umfasst das Verfahren, dass die vorerfassten Kamerabilddaten und LiDAR-Punktwolke-Daten dieselbe, zur selben Zeit erfasste, reale Fahrzeugumgebung repräsentieren. Aufgrund der Kalibrierung bzw. Ausrichtung des Kamera-Sensors und des LiDAR-Sensors zueinander kann somit auf eine softwaregestützte Synchronisierung der Daten verzichtet werden.

Gemäß einer weiteren bevorzugten Weiterbildung umfasst das Verfahren, dass die das zumindest eine reale Objekt beschreibenden Merkmale durch einen weiteren Algorithmus maschinellen Lernens extrahiert werden. Somit kann in vorteilhafter Weise eine effiziente Merkmalsextraktion durchgeführt werden.

Die hierin beschriebenen Merkmale des Verfahrens sind ebenfalls auf andere virtuelle Umgebungen wie beispielsweise das Testen anderer Fahrzeugarten in verschiedenen Umgebungen anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zum Erzeugen einer virtuellen Fahrzeugumgebung zum Testen hochautomatisierter Fahrfunktionen eines Kraftfahrzeugs; und
- Fig. 2: ein Diagramm eines Systems zum Erzeugen einer virtuellen Fahrzeugumgebung zum Testen hochautomatisierter Fahrfunktionen eines Kraftfahrzeugs unter Verwendung vorerfasster Videobilddaten, Radardaten und/oder einer Lidarpunktwolke einer realen Fahrzeugumgebung gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

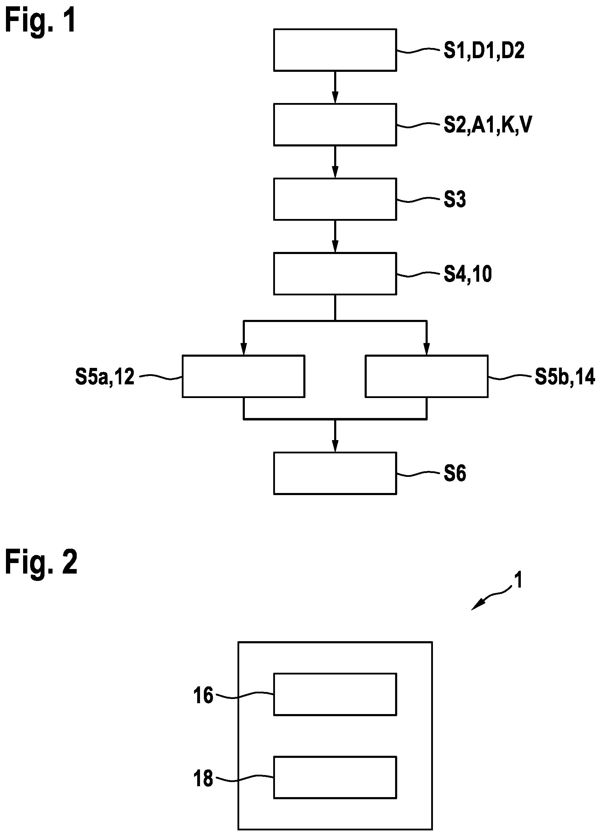

Fig. 1 zeigt ein Ablaufdiagramm eines Verfahrens zum Erzeugen einer virtuellen Fahrzeugumgebung zum Testen hochautomatisierter Fahrfunktionen eines Kraftfahrzeugs.

Das Verfahren umfasst ein Bereitstellen S1 von vorerfassten Kamerabilddaten D1 und LiDAR-Punktwolke-Daten D2 einer realen Fahrzeugumgebung sowie ein pixelweises Klassifizieren S2 der vorerfassten Kamerabilddaten D1 unter Verwendung eines Algorithmus maschinellen Lernens A, welcher für jedes Pixel eine zugehörige Klasse K und einen die Klassifizierung betreffenden Konfidenzwert V ausgibt.

Das Verfahren umfasst des Weiteren ein Projizieren S3 der pixelweise klassifizierten Kamerabilddaten D1 auf die vorerfassten LiDAR-Punktwolke-Daten D2, wobei jeweiligen durch klassifizierte Pixel der Kamerabilddaten D1 überlagerten, insbesondere selbe Bildkoordinaten aufweisenden, Punkten der LiDAR-Punktwolke eine identische Klasse K zugewiesen wird.

Ferner umfasst das Verfahren ein Instanz-Segmentieren S4 der klassifizierten LiDAR-Punktwolke-Daten D2 zum Bestimmen zumindest eines von einer Klasse K umfassten realen Objektes 10 sowie ein Selektieren und Aufrufen S5a eines dem zumindest einen realen Objekt 10 entsprechenden gespeicherten, synthetisch generierten ersten Objekts 12 oder prozedurales Generieren S5b eines dem zumindest einen realen Objekt 10 entsprechenden, synthetisch generierten zweiten Objekts 14.

Darüber hinaus umfasst das Verfahren ein Integrieren S6 des synthetisch generierten ersten Objekts 12 oder des synthetisch generierten zweiten Objekts 14 in eine vorgegebene virtuelle Fahrzeugumgebung.

Für eine vorgegebene erste Anzahl von Klassen K wird das Selektieren und Aufrufen S5a des dem zumindest einen realen Objekt 10 entsprechenden gespeicherten, synthetisch generierten ersten Objekts 12 durchgeführt. Des Weiteren wird für eine vorgegebene zweite Anzahl von Klassen K, insbesondere das prozedurale Generieren S4b des dem zumindest einen realen Objekt 10 entsprechenden, synthetisch generierten zweiten Objekts 14 durchgeführt.

Basierend auf dem Instanz-Segmentieren S4 der klassifizierten LiDAR-Punktwolke-Daten D2 zum Bestimmen zumindest eines von einer Klasse K umfassten realen Objektes 10 wird ferner ein Extrahieren von das zumindest eine reale Objekt 10 beschreibenden Merkmalen, insbesondere eine Größe und/oder ein Radius des Objekts, durchgeführt. Ferner wird basierend auf den extrahierten Merkmalen das prozedurale Generieren S5b des dem zumindest einen realen Objekt 10 entsprechenden, synthetisch generierten zweiten Objekts 14 durchgeführt.

Basierend auf den extrahierten Merkmalen wird der Weiteren ein Vergleichen des segmentierten, zumindest einen realen Objekts 10 einer Klasse K mit einer Vielzahl gespeicherter, synthetisch generierter Objekte durchgeführt.

Überdies wird, basierend auf dem Vergleichen des segmentierten, zumindest einen realen Objekts 10 einer Klasse K mit einer Vielzahl gespeicherter, synthetisch generierter Objekte ein, ein vorgegebenes Ähnlichkeitsmaß aufweisendes, gespeichertes, synthetisch generiertes erstes Objekt selektiert und aufgerufen.

Die durch den Algorithmus maschinellen Lernens A bestimmten Klassen K repräsentieren dabei Gebäude, Fahrzeuge, Verkehrsschilder, Ampeln, Fahrbahnen, Fahrbahnmarkierungen, Bepflanzung, Fußgänger und/oder sonstige Objekte. Jeweilige Punkte der LiDAR-Punktwolke, welche nicht durch klassifizierte Pixel der Kamerabilddaten D1 überlagert werden, insbesondere selbe Bildkoordinaten aufweisen, werden aus der LiDAR-Punktwolke entfernt.

Jeweilige Punkte der LiDAR-Punktwolke, welche durch klassifizierte Pixel der Kamerabilddaten D1 überlagert werden, welche Pixel einen Konfidenzwert V aufweisen, der geringer als ein vorgegebener erster Schwellwert ist, werden überdies zum Bereitstellen reduzierter LiDAR-Punktwolke-Daten D2, entfernt.

Das Instanz-Segmentieren S4 der klassifizierten LiDAR-Punktwolke-Daten D2 zum Bestimmen des von einer Klasse K umfassten zumindest einen realen Objekts 10 wird des Weiteren unter Verwendung der reduzierten LiDAR-Punktwolke-Daten D2 durchgeführt. Die vorerfassten Kamerabilddaten D1 und LiDAR-Punktwolke-Daten D2 repräsentieren dabei dieselbe, zur selben Zeit erfasste, reale Fahrzeugumgebung.

Die das zumindest eine reale Objekt 10 beschreibenden Merkmale werden durch einen weiteren Algorithmus maschinellen Lernens extrahiert.

Fig. 2 zeigt ein Diagramm eines Systems 1 zum Erzeugen einer virtuellen Fahrzeugumgebung zum Testen hochautomatisierter Fahrfunktionen eines Kraftfahrzeugs gemäß der bevorzugten Ausführungsform der Erfindung.

Das System 1 umfasst einen Datenspeicher 16 zum Bereitstellen von vorerfassten Kamerabilddaten D1 und LiDAR-Punktwolke-Daten D2 einer realen Fahrzeugumgebung sowie eine Berechnungseinrichtung 18, welche konfiguriert ist ein, pixelweises Klassifizieren der vorerfassten Kamerabilddaten D1 unter Verwendung eines Algorithmus maschinellen Lernens A durchzuführen, welcher dazu eingerichtet ist, für jedes Pixel eine zugehörige Klasse K und einen die Klassifizierung betreffenden Konfidenzwert V auszugeben.

Die Berechnungseinrichtung 18 ist ferner konfiguriert, ein Projizieren der pixelweise klassifizierten Kamerabilddaten D1 auf die vorerfassten LiDAR-Punktwolke-Daten D2 durchzuführen, wobei die Berechnungseinrichtung 18 konfiguriert ist, jeweiligen durch klassifizierte Pixel der Kamerabilddaten D1 überlagerten, insbesondere selbe Bildkoordinaten aufweisenden, Punkten der LiDAR-Punktwolke eine identische Klasse K zuzuweisen.

Des Weiteren ist die Berechnungseinrichtung 18 konfiguriert, ein Instanz-Segmentieren der klassifizierten LiDAR-Punktwolke-Daten D2 zum Bestimmen zumindest eines von einer Klasse K umfassten realen Objekts 10 durchzuführen. Die Berechnungseinrichtung 18 ist darüber hinaus konfiguriert, ein Selektieren und Aufrufen eines gespeicherten, synthetisch generierten ersten Objekts 12 oder prozedurales Generieren eines dem zumindest einen realen Objekt 10 entsprechenden, synthetisch generierten zweiten Objekts 14 durchzuführen.

Ferner ist die Berechnungseinrichtung 18 konfiguriert, ein Integrieren des synthetisch generierten ersten oder zweiten Objekts 14 in eine vorgegebene virtuelle Fahrzeugumgebung durchzuführen.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Das Verfahren kann ferner zumindest abschnittsweise sequentiell oder parallel durchgeführt werden.

## Patentansprüche

1. Computerimplementiertes Verfahren zum Erzeugen einer virtuellen Fahrzeugumgebung zum Testen hochautomatisierter Fahrfunktionen eines Kraftfahrzeugs, mit den Schritten:
Bereitstellen (S1) von vorerfassten Kamerabilddaten (D1) und LiDAR-Punktwolke-Daten (D2) einer realen Fahrzeugumgebung;
pixelweises Klassifizieren (S2) der vorerfassten Kamerabilddaten (D1) unter Verwendung eines Algorithmus maschinellen Lernens (A), welcher für jedes Pixel eine zugehörige Klasse (K) und einen die Klassifizierung betreffenden Konfidenzwert (V) ausgibt;
Projizieren (S3) der pixelweise klassifizierten Kamerabilddaten (D1) auf die vorerfassten LiDAR-Punktwolke-Daten (D2), wobei jeweiligen durch klassifizierte Pixel der Kamerabilddaten (D1) überlagerten, insbesondere selbe Bildkoordinaten aufweisenden, Punkten der LiDAR-Punktwolke eine identische Klasse (K) zugewiesen wird;
Instanz-Segmentieren (S4) der klassifizierten LiDAR-Punktwolke-Daten (D2) zum Bestimmen zumindest eines von einer Klasse (K) umfassten realen Objektes (10);
Selektieren und Aufrufen (S5a) eines dem zumindest einen realen Objekt (10) entsprechenden gespeicherten, synthetisch generierten ersten Objekts (12) oder prozedurales Generieren (S5b) eines dem zumindest einen realen Objekt (10) entsprechenden, synthetisch generierten zweiten Objekts (14); und
Integrieren (S6) des synthetisch generierten ersten Objekts (12) oder des synthetisch generierten zweiten Objekts (14) in eine vorgegebene virtuelle Fahrzeugumgebung.

2. Computerimplementiertes Verfahren nach Anspruch 1, wobei für eine vorgegebene erste Anzahl von Klassen (K) das Selektieren und Aufrufen (S5a) des dem zumindest einen realen Objekt (10) entsprechenden gespeicherten, synthetisch generierten ersten Objekts (12) durchgeführt und für eine vorgegebene zweite Anzahl von Klassen (K), insbesondere das prozedurale Generieren (S5b) des dem zumindest einen realen Objekt (10) entsprechenden, synthetisch generierten zweiten Objekts (14) durchgeführt wird.

3. Computerimplementiertes Verfahren nach Anspruch 1 oder 2, wobei basierend auf dem Instanz-Segmentieren (S4) der klassifizierten LiDAR-Punktwolke-Daten (D2) zum Bestimmen zumindest eines von einer Klasse (K) umfassten realen Objektes (10) ein Extrahieren von das zumindest eine reale Objekt (10) beschreibenden Merkmalen, insbesondere eine Größe und/oder ein Radius des Objekts, durchgeführt wird.

4. Computerimplementiertes Verfahren nach Anspruch 3, wobei basierend auf den extrahierten Merkmalen das prozedurale Generieren (S5b) des dem zumindest einen realen Objekt (10) entsprechenden, synthetisch generierten zweiten Objekts (14) durchgeführt wird.

5. Computerimplementiertes Verfahren nach Anspruch 3, wobei basierend auf den extrahierten Merkmalen ein Vergleichen des segmentierten, zumindest einen realen Objekts (10) einer Klasse (K) mit einer Vielzahl gespeicherter, synthetisch generierter Objekte (14) durchgeführt wird.

6. Computerimplementiertes Verfahren nach Anspruch 5, wobei basierend auf dem Vergleichen des segmentierten, zumindest einen realen Objekts (10) einer Klasse (K) mit einer Vielzahl gespeicherter, synthetisch generierter Objekte (14) ein, ein vorgegebenes Ähnlichkeitsmaß aufweisendes, gespeichertes, synthetisch generiertes erstes Objekt (14) selektiert und aufgerufen wird.

7. Computerimplementiertes Verfahren nach einem der vorhergehenden Ansprüche, wobei die durch den eines Algorithmus maschinellen Lernens (A) bestimmten Klassen (K) Gebäude, Fahrzeuge, Verkehrsschilder, Ampeln, Fahrbahnen, Fahrbahnmarkierungen, Bepflanzung, Fußgänger und/oder sonstige Objekte repräsentieren.

8. Computerimplementiertes Verfahren nach einem der vorhergehenden Ansprüche, wobei jeweilige Punkte der LiDAR-Punktwolke, welche nicht durch klassifizierte Pixel der Kamerabilddaten (D1) überlagert werden, insbesondere selbe Bildkoordinaten aufweisen, aus der LiDAR-Punktwolke entfernt werden.

9. Computerimplementiertes Verfahren nach einem der vorhergehenden Ansprüche, wobei jeweilige Punkte der LiDAR-Punktwolke, welche durch klassifizierte Pixel der Kamerabilddaten (D1) überlagert werden, welche Pixel einen Konfidenzwert (V) aufweisen, der geringer als ein vorgegebener erster Schwellwert ist, zum Bereitstellen reduzierter LiDAR-Punktwolke-Daten (D2), entfernt werden.

10. Computerimplementiertes Verfahren nach Anspruch 9, wobei das Instanz-Segmentieren (S4) der klassifizierten LiDAR-Punktwolke-Daten (D2) zum Bestimmen des von einer Klasse (K) umfassten zumindest einen realen Objekts (10) unter Verwendung der reduzierten LiDAR-Punktwolke-Daten (D2) durchgeführt wird.

11. Computerimplementiertes Verfahren nach einem der vorhergehenden Ansprüche, wobei die vorerfassten Kamerabilddaten (D1) und LiDAR-Punktwolke-Daten (D2) dieselbe, zur selben Zeit erfasste, reale Fahrzeugumgebung repräsentieren.

12. Computerimplementiertes Verfahren nach Anspruch 3, wobei die das zumindest eine reale Objekt (10) beschreibenden Merkmale durch einen weiteren Algorithmus maschinellen Lernens extrahiert werden.

13. System (1) zum Erzeugen einer virtuellen Fahrzeugumgebung zum Testen hochautomatisierter Fahrfunktionen eines Kraftfahrzeugs unter Verwendung vorerfasster Videobilddaten und/oder einer Lidarpunktwolke einer realen Fahrzeugumgebung, umfassend:
einen Datenspeicher (16) zum Bereitstellen von vorerfassten Kamerabilddaten (D1) und LiDAR-Punktwolke-Daten (D2) einer realen Fahrzeugumgebung;
eine Berechnungseinrichtung (18) zum pixelweisen Klassifizieren der vorerfassten Kamerabilddaten (D1) unter Verwendung eines Algorithmus maschinellen Lernens (A), welcher dazu eingerichtet ist, für jedes Pixel eine zugehörige Klasse (K) und einen die Klassifizierung betreffenden Konfidenzwert (V) auszugeben,
wobei die Berechnungseinrichtung (18) konfiguriert ist, ein Projizieren der pixelweise klassifizierten Kamerabilddaten (D1) auf die vorerfassten LiDAR-Punktwolke-Daten (D2) durchzuführen sowie jeweiligen durch klassifizierte Pixel der Kamerabilddaten (D1) überlagerten, insbesondere selbe Bildkoordinaten aufweisenden, Punkten der LiDAR-Punktwolke eine identische Klasse (K) zuzuweisen,
wobei die Berechnungseinrichtung (18) konfiguriert ist, ein Instanz-Segmentieren der klassifizierten LiDAR-Punktwolke-Daten (D2) zum Bestimmen zumindest eines von einer Klasse (K) umfassten realen Objekts (10) durchzuführen,
wobei die Berechnungseinrichtung (18) konfiguriert ist, ein Selektieren und Aufrufen eines gespeicherten, synthetisch generierten ersten Objekts (12) oder prozedurales Generieren eines dem zumindest einen realen Objekt (10) entsprechenden, synthetisch generierten zweiten Objekts (14) durchzuführen, und
wobei die Berechnungseinrichtung (18) konfiguriert ist, ein Integrieren des synthetisch generierten ersten oder zweiten Objekts (14) in eine vorgegebene virtuelle Fahrzeugumgebung durchzuführen.

14. Computerprogramm mit Programmcode, um das Verfahren nach einem der Ansprüche 1 bis 12 durchzuführen, wenn das Computerprogramm auf einem Computer ausgeführt wird.

15. Computerlesbarer Datenträger mit Programmcode eines Computerprogramms, um das Verfahren nach einem der Ansprüche 1 bis 12 durchzuführen, wenn das Computerprogramm auf einem Computer ausgeführt wird.

## Claims

1. Computer-implemented method for generating a virtual vehicle environment for testing highly automated driving functions of a motor vehicle, comprising the steps of:
Providing (S1) pre-acquired camera image data (D1) and LiDAR point cloud data (D2) of a real vehicle environment;
classifying (S2) the pre-acquired camera image data (D1) pixel by pixel using a machine learning algorithm (A) which outputs an associated class (K) and a confidence value (V) relating to the classification for each pixel;
projecting (S3) the pixel-by-pixel classified camera image data (D1) onto the pre- acquired LiDAR point cloud data (D2), whereby an identical class (K) is assigned to respective points of the LiDAR point cloud which are superimposed by classified pixels of the camera image data (D1) and in particular have the same image coordinates;
instance segmenting (S4) the classified LiDAR point cloud data (D2) to determine at least one real object (10) covered by a class (K);
selecting and calling (S5a) a stored, synthetically generated first object (12) corresponding to the at least one real object (10) or procedurally generating (S5b) a synthetically generated second object (14) corresponding to the at least one real object (10); and
integrating (S6) the synthetically generated first object (12) or the synthetically generated second object (14) into a predetermined virtual vehicle environment.

2. Computer-implemented method according to claim 1, wherein for a predetermined first number of classes (K), the selecting and calling (S5a) of the stored, synthetically generated first object (12) corresponding to the at least one real object (10) is carried out, and for a predetermined second number of classes (K), in particular the procedural generation (S5b) of the synthetically generated second object (14) corresponding to the at least one real object (10) is carried out.

3. Computer-implemented method according to claim 1 or 2, wherein, based on the instance segmentation (S4) of the classified LiDAR point cloud data (D2) for determining at least one real object (10) comprised by a class (K), an extraction of features describing the at least one real object (10), in particular a size and/or a radius of the object, is performed.

4. Computer-implemented method according to claim 3, wherein, based on the extracted features, the procedural generation (S5b) of the synthetically generated second object (14) corresponding to the at least one real object (10) is carried out.

5. Computer-implemented method according to claim 3, wherein a comparison of the segmented, at least one real object (10) of a class (K) with a plurality of stored, synthetically generated objects (14) is carried out based on the extracted features.

6. Computer-implemented method according to claim 5, wherein, based on the comparison of the segmented, at least one real object (10) of a class (K) with a plurality of stored, synthetically generated objects (14), a stored, synthetically generated first object (14) having a predetermined similarity measure is selected and called.

7. Computer-implemented method according to one of the preceding claims, wherein the classes (K) determined by a machine learning algorithm (A) represent buildings, vehicles, traffic signs, traffic lights, roadways, road markings, vegetation, pedestrians and/or other objects.

8. Computer-implemented method according to one of the preceding claims, wherein respective points of the LiDAR point cloud which are not superimposed by classified pixels of the camera image data (D1), in particular have the same image coordinates, are removed from the LiDAR point cloud.

9. Computer-implemented method according to one of the preceding claims, wherein respective points of the LiDAR point cloud which are superimposed by classified pixels of the camera image data (D1), which pixels have a confidence value (V) which is less than a predetermined first threshold value, are removed to provide reduced LiDAR point cloud data (D2).

10. The computer-implemented method according to claim 9, wherein the instance segmenting (S4) of the classified LiDAR point cloud data (D2) for determining the at least one real object (10) comprised by a class (K) is performed using the reduced LiDAR point cloud data (D2).

11. Computer-implemented method according to any one of the preceding claims, wherein the pre- acquired camera image data (D1) and LiDAR point cloud data (D2) represent the same real vehicle environment captured at the same time.

12. The computer-implemented method according to claim 3, wherein the features describing the at least one real object (10) are extracted by a further machine learning algorithm.

13. System (1) for generating a virtual vehicle environment for testing highly automated driving functions of a motor vehicle using pre- acquired video image data and/or a lidar point cloud of a real vehicle environment, comprising:
a data memory (16) for providing pre- acquired camera image data (D1) and LiDAR point cloud data (D2) of a real vehicle environment;
a calculation device (18) for classifying the pre- acquired camera image data (D1) pixel by pixel using a machine learning algorithm (A), which is set up to output an associated class (K) and a confidence value (V) relating to the classification for each pixel,
wherein the calculation device (18) is configured to perform a projection of the camera image data (D1) classified pixel by pixel onto the pre- acquired LiDAR point cloud data (D2) and to assign an identical class (K) to respective points of the LiDAR point cloud which are superimposed by classified pixels of the camera image data (D1) and in particular have the same image coordinates,
wherein the calculation device (18) is configured to perform an instance segmentation of the classified LiDAR point cloud data (D2) to determine at least one real object (10) comprised by a class (K),
wherein the calculation device (18) is configured to perform selection and call of a stored, synthetically generated first object (12) or procedural generation of a synthetically generated second object (14) corresponding to the at least one real object (10), and
wherein the calculation device (18) is configured to perform an integration of the synthetically generated first or second object (14) into a predetermined virtual vehicle environment.

14. Computer program comprising program code to perform the method according to any one of claims 1 to 12 when the computer program is executed on a computer.

15. Computer readable medium comprising program code of a computer program to perform the method according to any one of claims 1 to 12 when the computer program is executed on a computer.

## Revendications

1. Procédé mis en oeuvre par ordinateur pour générer un environnement de véhicule virtuel pour tester des fonctions de conduite hautement automatisées d'un véhicule automobile, comprenant les étapes suivantes :
Mise à disposition (S1) de données d'image de caméra préenregistrées (D1) et de données de nuage de points LiDAR (D2) d'un environnement de véhicule réel ;
classer (S2) pixel par pixel les données d'image de caméra préenregistrées (D1) en utilisant un algorithme d'apprentissage automatique (A) qui fournit en sortie pour chaque pixel une classe associée (K) et une valeur de confiance (V) concernant la classification ;
projection (S3) des données d'image de caméra (D1) classées pixel par pixel sur les données de nuage de points LiDAR (D2) préenregistrées, une classe (K) identique étant attribuée à des points du nuage de points LiDAR superposés par des pixels classés des données d'image de caméra (D1) et présentant notamment les mêmes coordonnées d'image ;
segmentation d'instance (S4) des données de nuage de points LiDAR classifiées (D2) pour déterminer au moins un objet réel (10) compris dans une classe (K) ; sélection et appel (S5a) d'un premier objet (12) généré synthétiquement et mémorisé correspondant audit au moins un objet réel (10) ou génération procédurale (S5b) d'un deuxième objet (14) généré synthétiquement et correspondant audit au moins un objet réel (10) ; et
intégrer (S6) le premier objet (12) généré synthétiquement ou le deuxième objet (14) généré synthétiquement dans un environnement de véhicule virtuel prédéterminé.

2. Procédé mis en oeuvre par ordinateur selon la revendication 1, dans lequel, pour un premier nombre prédéterminé de classes (K), on effectue la sélection et l'appel (S5a) du premier objet (12) généré synthétiquement et mémorisé correspondant à l'au moins un objet réel (10) et, pour un deuxième nombre prédéterminé de classes (K), on effectue notamment la génération procédurale (S5b) du deuxième objet (14) généré synthétiquement et correspondant à l'au moins un objet réel (10).

3. Procédé mis en oeuvre par ordinateur selon la revendication 1 ou 2, dans lequel, sur la base de la segmentation d'instance (S4) des données de nuage de points LiDAR classifiées (D2) pour déterminer au moins un objet réel (10) compris dans une classe (K), on effectue une extraction de caractéristiques décrivant ledit au moins un objet réel (10), en particulier une taille et/ou un rayon de l'objet.

4. Procédé mis en œuvre par ordinateur selon la revendication 3, dans lequel, sur la base des caractéristiques extraites, la génération procédurale (S5b) du deuxième objet (14) généré synthétiquement et correspondant audit au moins un objet réel (10) est effectuée.

5. Procédé mis en oeuvre par ordinateur selon la revendication 3, dans lequel, sur la base des caractéristiques extraites, une comparaison de l'objet réel segmenté (10), au nombre d'au moins un, d'une classe (K) est effectuée avec une pluralité d'objets (14) générés de manière synthétique et mémorisés.

6. Procédé mis en oeuvre par ordinateur selon la revendication 5, dans lequel, sur la base de la comparaison de l'au moins un objet réel segmenté (10) d'une classe (K) avec une pluralité d'objets générés synthétiquement mémorisés (14), un premier objet généré synthétiquement mémorisé (14) présentant une mesure de similitude prédéfinie est sélectionné et appelé.

7. Procédé mis en œuvre par ordinateur selon l'une quelconque des revendications précédentes, dans lequel les classes (K) déterminées par l'algorithme d'apprentissage automatique (A) représentent des bâtiments, des véhicules, des panneaux de signalisation, des feux de signalisation, des voies de circulation, des marquages routiers, des plantations, des piétons et/ou d'autres objets.

8. Procédé mis en oeuvre par ordinateur selon l'une des revendications précédentes, dans lequel des points respectifs du nuage de points LiDAR qui ne sont pas superposés par des pixels classifiés des données de caméra (D1), en particulier qui présentent les mêmes coordonnées d'image, sont éliminés du nuage de points LiDAR.

9. Procédé mis en oeuvre par ordinateur selon l'une des revendications précédentes, dans lequel des points respectifs du nuage de points LiDAR, qui sont superposés par des pixels classés des données de caméra (D1), lesquels pixels présentent une valeur de confiance (V) qui est inférieure à une première valeur de seuil prédéfinie, sont éliminés pour fournir des données de nuage de points LiDAR réduites (D2).

10. Procédé mis en oeuvre par ordinateur selon la revendication 9, dans lequel la segmentation d'instance (S4) des données de nuage de points LiDAR classifiées (D2) pour déterminer le au moins un objet réel (10) compris dans une classe (K) est effectuée en utilisant les données de nuage de points LiDAR réduites (D2).

11. Procédé mis en œuvre par ordinateur selon l'une quelconque des revendications précédentes, dans lequel les données d'image de caméra préenregistrées (D1) et les données de nuage de points LiDAR (D2) représentent le même environnement de véhicule réel capturé au même moment.

12. Procédé mis en œuvre par ordinateur selon la revendication 3, dans lequel les caractéristiques décrivant ledit au moins un objet réel (10) sont extraites par un autre algorithme d'apprentissage automatique.

13. Système (1) pour générer un environnement de véhicule virtuel pour tester des fonctions de conduite hautement automatisées d'un véhicule automobile en utilisant des données d'image vidéo préenregistrées et/ou un nuage de points Lidar d'un environnement de véhicule réel, comprenant :
une mémoire de données (16) pour mettre à disposition des données d'images de caméra (D1) et des données de nuage de points LiDAR (D2) préenregistrées d'un environnement de véhicule réel;
un dispositif de calcul (18) pour classer pixel par pixel les données d'image de caméra préenregistrées (D1) en utilisant un algorithme d'apprentissage automatique (A) qui est conçu pour délivrer pour chaque pixel une classe associée (K) et une valeur de confiance (V) concernant la classification,
le dispositif de calcul (18) étant configuré pour effectuer une projection des données d'image de caméra (D1) classifiées par pixel sur les données de nuage de points LiDAR (D2) préenregistrées et pour attribuer une classe (K) identique à des points du nuage de points LiDAR superposés par des pixels classifiés des données d'image de caméra (D1), en particulier présentant les mêmes coordonnées d'image,
le dispositif de calcul (18) étant configuré pour effectuer une segmentation d'instance des données de nuage de points LiDAR classifiées (D2) pour déterminer au moins un objet réel (10) compris dans une classe (K),
dans lequel le dispositif de calcul (18) est configuré pour effectuer une sélection et un appel d'un premier objet généré synthétiquement stocké (12) ou une génération procédurale d'un deuxième objet généré synthétiquement (14) correspondant audit au moins un objet réel (10), et
le dispositif de calcul (18) étant configuré pour effectuer une intégration du premier ou du deuxième objet (14) généré de manière synthétique dans un environnement de véhicule virtuel prédéterminé.

14. Programme d'ordinateur comprenant un code de programme pour mettre en œuvre le procédé selon l'une quelconque des revendications 1 à 12, lorsque le programme d'ordinateur est exécuté sur un ordinateur.

15. Support de données lisible par ordinateur comprenant un code de programme d'un programme d'ordinateur pour mettre en œuvre le procédé selon l'une quelconque des revendications 1 à 12 lorsque le programme d'ordinateur est exécuté sur un ordinateur.
